(19) Europäisches Patentamt / European Patent Office / Office européen des brevets

(11) **EP 4 324 611 A1**

(12) **EUROPEAN PATENT APPLICATION**
published in accordance with Art. 153(4) EPC

(43) Date of publication:
**21.02.2024 Bulletin 2024/08**

(21) Application number: **22788118.2**

(22) Date of filing: **08.04.2022**

(51) International Patent Classification (IPC):
**B28B 1/30** $^{(2006.01)}$    **B33Y 10/00** $^{(2015.01)}$
**B33Y 70/10** $^{(2020.01)}$    **C01B 33/113** $^{(2006.01)}$
**C01B 33/12** $^{(2006.01)}$    **C01F 7/02** $^{(2022.01)}$
**C04B 35/64** $^{(2006.01)}$

(52) Cooperative Patent Classification (CPC):
**B28B 1/30; B33Y 10/00; B33Y 70/10;
C01B 33/113; C01B 33/12; C01F 7/02;
C04B 35/64;** Y02P 10/25

(86) International application number:
**PCT/JP2022/017333**

(87) International publication number:
**WO 2022/220193 (20.10.2022 Gazette 2022/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.04.2021   JP 2021067069
01.04.2022   JP 2022061812**

(71) Applicant: **CANON KABUSHIKI KAISHA
Tokyo 146-8501 (JP)**

(72) Inventors:
• **MURAKAMI, Shunsuke
  Tokyo 146-8501 (JP)**
• **SHIMIZU, Yasushi
  Tokyo 146-8501 (JP)**
• **YASUI, Nobuhiro
  Tokyo 146-8501 (JP)**
• **OSHIMA, Kanako
  Tokyo 146-8501 (JP)**

(74) Representative: **Canon Europe Limited
European Intellectual Property Group
4 Roundwood Avenue
Stockley Park
Uxbridge UB11 1AF (GB)**

(54) **POWDER FOR USE IN ADDITIVE MANUFACTURING AND PRODUCTION METHOD FOR CERAMIC ARTICLE USING SAME**

(57)    A powder of an oxide that is used in an additive production method for manufacturing with application of laser light, the powder includes a silicon monoxide (SiO) particle, and at least one type of oxide particle other than SiO, wherein as the oxide particle other than the SiO, at least one type is selected from the group including an aluminum oxide ($Al_2O_3$) particle, a silicon dioxide ($SiO_2$) particle, and a compound particle of $Al_2O_3$ and $SiO_2$, so that the powder except for the SiO particle includes silicon and aluminum as elements, and wherein in a case where components of the powder except for the SiO particle are converted into oxides represented by the $Al_2O_3$ and the $SiO_2$, x, y, and z representing mass fractions of the $Al_2O_3$, the $SiO_2$, and the SiO, respectively, in an entirety of the powder satisfy the following relationships:

$$20 \leq x < 99.8,$$

$$0 < y \leq 80,$$

and

$$0.2 \leq z \leq 50.$$

EP 4 324 611 A1

# FIG.2

**Description**

Technical Field

The present invention relates to a powder for use in producing a ceramic article by an additive manufacturing technique using laser.

Background Art

With the progress of additive production techniques, dense and various ceramic articles are desired to be produced using an additive manufacturing technique. In recent years, a raw material powder for use in producing a ceramic article excellent in thermal properties, such as thermal shock resistance and a low thermal expansion rate, using a powder bed melting method excellent in manufacturing accuracy is developed.

If, however, a powder having a low light absorption ability, such as aluminum oxide or gallium oxide, is used as a raw material in the powder bed melting method, laser light is diffused in the powder, which leads to a failure in locally melting the powder. Consequently, it is difficult to achieve high manufacturing accuracy.

In patent literature (PTL) 1, a rare earth oxide having a higher absorption ability than that of aluminum oxide ($Al_2O_3$) with respect to light of a wavelength included in laser light is added as an absorber to a powder of the $Al_2O_3$, whereby the diffusion of light is prevented and excellent manufacturing accuracy is achieved.

Citation List

Patent Literature

PTL ^Japanese Patent Application Laid-Open No. 2019-19051

Summary of Invention

Technical Problem

In PTL 1, since the rare earth oxide is used as the absorber, a powder as a raw material is expensive. To apply the additive production technique to various purposes, an inexpensive powder that enables manufacturing with high accuracy is required.

Solution to Problem

According to an aspect of the present invention, a powder that is used in an additive production method for manufacturing with application of laser light, the powder includes a silicon monoxide (SiO) particle, and at least one type of oxide particle other than SiO, wherein as the oxide particle other than the SiO, at least one type is selected from the group including an aluminum oxide ($Al_2O_3$) particle, a silicon dioxide ($SiO_2$) particle, and a compound particle of $Al_2O_3$ and $SiO_2$, so that the powder except for the SiO particle includes silicon and aluminum as elements, and wherein in a case where components of the powder except for the SiO particle are converted into oxides represented by the $Al_2O_3$ and the $SiO_2$, x, y, and z representing mass fractions of the $Al_2O_3$, the $SiO_2$, and the SiO, respectively, in an entirety of the powder satisfy the following relationships:

$$20 \leq x < 99.8,$$

$$0 < y \leq 80,$$

and

$$0.2 \leq z \leq 50.$$

Advantageous Effects of Invention

With a powder according to the present invention, it is possible to inexpensively produce a ceramic article with high manufacturing accuracy using an additive production technique and provide the ceramic article.

Brief Description of Drawings

[Fig. 1] Fig. 1 is a conceptual diagram of temperature rise characteristics in application of laser light to a powder including a silicon monoxide (SiO) particle and a powder not including the SiO particle.
[Fig. 2] Fig. 2 is a conceptual diagram of a three-dimensional manufacturing apparatus using a powder bed fusion method.
[Fig. 3] Fig. 3 is a conceptual diagram illustrating manufacturing using a cladding method.

Description of Embodiments

An embodiment for carrying out the present invention (hereinafter referred to as "the present exemplary embodiment") is described with reference to the drawings. The present invention, however, is not limited to the following specific examples.

(Powder)

A powder according to the present invention is suitable as a raw material powder for use in producing a ceramic article containing a compound of aluminum oxide ($Al_2O_3$) and silicon dioxide ($SiO_2$) excellent in heat resistance, using an additive manufacturing method. The powder includes a silicon monoxide (SiO) particle and one or more types of oxide particles other than SiO. As the oxide particles other than the SiO, at least one type is selected from the group including an $Al_2O_3$ particle, an $SiO_2$ particle, and a compound particle of $Al_2O_3$ and $SiO_2$ so that the powder except for the SiO particle includes silicon and aluminum as elements. Then, in a case where components of the entirety of the oxide particles other than the SiO (the powder except for the SiO particle) are converted into oxides represented by the $Al_2O_3$ and the $SiO_2$, x, y, and z representing mass fractions of the $Al_2O_3$, the $SiO_2$, and the SiO, respectively, in an entirety of the raw material powder satisfy the following relationships:

$$20 \leq x < 99.8.$$

$$0 < y \leq 80,$$

and

$$0.2 \leq z \leq 50.$$

Each of the SiO particle, the $Al_2O_3$ particle, the $SiO_2$ particle, and the compound particle of the $Al_2O_3$ and the $SiO_2$ may include 1000 ppm or less of impurities other than the described compound.
In the present invention, a particle included in the powder refers to a so-called primary particle, and the state of the particle included in the powder may be in primary particle form or in secondary particle form obtained by sintering of a plurality of primary particles. The crystalline nature of the particle may be amorphous or crystalline. In the exemplary embodiment, a case where the powder "includes a plurality of compounds" indicates a case where many types of primary particles each composed of one type of compound coexist, a case where one type or many types of secondary particles composed of a primary particle of a plurality of types of compounds coexist, and a case where these particles coexist. Hereinafter, a primary particle composing the powder will be referred to simply as a "particle". For example, in a case where the powder includes the $Al_2O_3$ particle and the $SiO_2$ particle independent of each other, each of the $Al_2O_3$ particle and the $SiO_2$ particle is referred to as a "particle". In a case where the powder is composed of a secondary particle obtained by sintering of the SiO particle, the $Al_2O_3$ particle, and the $SiO_2$ particle, each of the SiO particle, the $Al_2O_3$ particle, and the $SiO_2$ particle composing the secondary particle is referred to as a "particle".
As an example where the powder is composed of individually independent particles, if the $Al_2O_3$ particle is A,

the $SiO_2$ particle is B, the compound particle of the $Al_2O_3$ and the $SiO_2$ is C, and the SiO particle is D, a plurality of combinations is possible. Specifically, combinations of A + D, A + B + D, A + C + D, A + B + C + D, B + C + D, and C + D can be selected.

Although the powder in the unused state is mainly described below, a case where a particle other than the above described particles is included by using the powder in the additive manufacturing is not excluded. For example, the following case is possible. The powder is a mixture of the $Al_2O_3$ particle, the $SiO_2$ particle, and the SiO particle in the unused state, but through manufacturing steps, the powder includes a composite oxide particle of the $Al_2O_3$ and the $SiO_2$ in which the $Al_2O_3$ particle and the $SiO_2$ particle are melted and integrated together.

As an example where a particle composing the powder includes a plurality of primary particles, if a primary particle of the $Al_2O_3$ is A, a primary particle of the $SiO_2$ is B, a primary particle of a composite oxide including aluminum and silicon is C, and a primary particle of the SiO is D, a plurality of combinations is possible. As the combinations of the primary particles composing the particle, A + B, A + C, A + D, A + B + C, A + B + D, A + C + D, A + B + C + D, B + C, B + C + D, C, and C + D can be selected.

In the present invention, the representation of a compound, such as $Al_2O_3$, $SiO_2$, or SiO is not limited by the composition of the represented stoichiometric ratio, and an error in the constituent element ratio within $\pm 30\%$ from the stoichiometric ratio standardized by a metal element is tolerated. For example, a compound having a constituent element ratio of Si:O = 1: 1.30 is also included in the representation of SiO. That is, SiO can be represented as $SiO_m$ $(0.7 \leq m \leq 1.3)$.

The SiO has a brown color or a black color and has a relatively higher light absorption ability than the $Al_2O_3$ and the $SiO_2$ included in the powder with respect to light of a wavelength applied in the manufacturing (laser light). If the SiO absorbs the laser light, silicon (Si) changes from bivalent to tetravalent, the SiO in a metastable state changes to the $SiO_2$ in a more stable state, and the light absorption ability with respect to the laser light decreases. The manufacturing is performed using the powder obtained by adding the SiO having such a property as an absorber to the aluminum oxide ($Al_2O_3$) and the silicon dioxide ($SiO_2$), whereby it is possible to obtain the following action effects.

A first action effect is that the SiO as the absorber efficiently absorbs the laser light used in the production and reaches a high temperature, whereby heat is conducted to another compound present in a region corresponding to the focal spot size of the laser light and causes a rise in temperature. As a result, it is possible to effectively locally heat a portion corresponding to the focal spot size of the laser light and clarify the interface between a region where the powder should be hardened (a region to which the laser light is applied) and a region where the powder is not to be hardened (a region to which the laser light is not applied). Thus, it is possible to improve manufacturing accuracy.

A second action effect is that the SiO changes to the $SiO_2$ having a low light absorption ability due to the application of the laser light, and the light absorption of a portion where the powder is hardened (a hardened portion) by application of the laser light once is reduced. If the light absorption ability of the SiO decreases to five-sixths times that before the application of the laser light, and even if the laser light is applied to the hardened portion under the same condition as when the powder is hardened, the powder is not so influenced as to cause the deterioration of the manufacturing accuracy. That is, since the absorber is hardly present in the hardened portion, a rise in temperature as before the application of the laser light does not occur. Even if the laser light is applied to the powder adj acent to the hardened portion, the deformation and the transformation of the hardened portion are prevented. As a result, a process margin, such as an application condition for the laser light, expands, which results in reduction in the influence of a change in the application condition on the manufacturing accuracy. To obtain sufficient manufacturing accuracy, it is desirable that the light absorption ability of the SiO alone before the application of the laser light should be different by 1.2 times or more from the light absorption ability of the absorber, the composition of which has been changed after the application of the laser light. It is further desirable that the light absorption ability of the SiO alone before the application of the laser light should be different by twice or more from the light absorption ability of the absorber, the composition of which has been changed after the application of the laser light.

A third action effect is that after the application of the laser light, the SiO changes to the $SiO_2$ and is incorporated into a manufactured product, but the $SiO_2$ is composed of an element composing the compound of the $Al_2O_3$ and the $SiO_2$ typified by mullite. Thus, the physicality of the manufactured product (an article) is not undermined.

As described above, with manufacturing that is performed by selectively applying laser light to the powder according to the present invention, the above first to third action effects are obtained, and it is possible to manufacture a ceramic article including a compound of $Al_2O_3$ and $SiO_2$ typified by mullite with high accuracy. Moreover, SiO is distributed to the market as a negative electrode for a lithium-ion secondary battery and thus can be relatively inexpensively procured among possible compounds as absorbers.

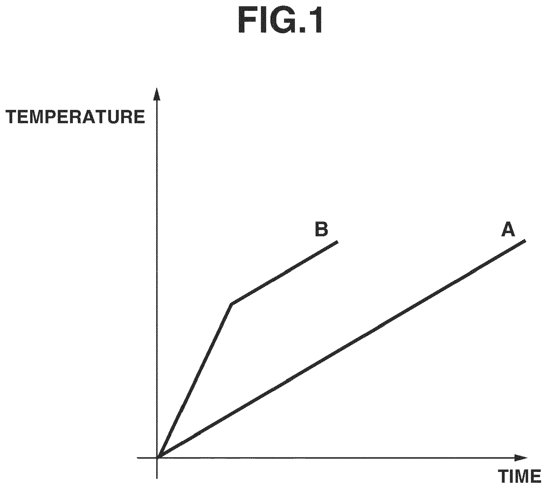

With reference to a conceptual diagram illustrated in Fig. 1, these action effects are described in more detail. In Fig. 1, the horizontal axis represents the time of the application of the laser light, and the vertical axis represents the temperature of the region to which the laser light is applied. A line A indicates a rise in temperature of a powder that includes the $Al_2O_3$ particle and the $SiO_2$ particle and does not include the SiO particle. A line B indicates the concept of the temperature rise characteristics of the powder according to the present exemplary embodiment including the $Al_2O_3$ particle, the $SiO_2$ particle, and the SiO particle. Each powder contains the same mass fractions of the $Al_2O_3$ and the

$SiO_2$. Fig. 1 is merely a diagram illustrating the concept, and a temperature rise process is not limited to the illustrated linear temperature rise process.

Since the powder that does not include the SiO particle has a low light absorption ability, the applied laser light is scattered, and it is not possible to locally raise the temperature of the powder. Thus, the heating efficiency of the powder is poor. To raise the temperature of the powder in the region to which the laser light is applied to a temperature required to sinter or melt and coagulate the powder, it is necessary to increase input energy per unit volume. Thus, the powder exhibits the temperature rise characteristics indicated by the line A. If the laser light is applied with high input energy to harden the powder, the scattered laser light raises the temperature of the powder in a neighborhood portion, which leads to an unclear temperature difference between the laser application region and the powder in the periphery of the laser application region. Consequently, a low-density sintered portion is formed near a region that should be hardened, and high manufacturing accuracy cannot be obtained.

In the present invention, the expression "sintering or melting and coagulating" is not limited to a case where a powder is not melted as sintering, or a case where a powder does not remain unmelted as melting. The expression "sintering or melting and coagulating" includes a sintered state where powders are combined together, the state where an unsintered portion is partially included, a liquid phase sintering state where a melted product is present around a powder, and a melted state where a powder remaining partially unmelted is further present. Hereinafter, "sintering or melting and coagulating" are collectively referred to as "hardening".

In a case where the laser light is applied to the powder including the SiO particle, the SiO absorbs the laser light, and the temperature of the powder quickly rises as indicated by the line B in Fig. 1. Thus, the heating efficiency of the powder is excellent, and it is possible to locally heat the powder. The temperature difference between the laser application region and a peripheral region can be sufficiently ensured, and the range of a sintered portion generated near a hardened portion is narrow. Thus, excellent manufacturing accuracy can be obtained. In the hardened portion, the SiO changes to the $SiO_2$, and the light absorption ability decreases. Thus, the powder exhibits characteristics similar to those of the powder that does not include the absorber. Thus, due to a change in the process condition, even if the laser light is applied to a portion where the manufacturing has been already completed, a rise in temperature is relatively small, and the powder is hardly influenced by the rise in temperature. A region to which laser light is being applied and a region that is already hardened are combined together by fusion due to thermal conduction between both regions. Thus, issues do not arise in the connection between a region hardened earlier and a region hardened later and the strength of a boundary portion between the regions. As described above, if the additive manufacturing is performed using the powder according to the present invention having the characteristics indicated by the line B, it is possible to obtain the above three action effects.

In the situation where a powder bed layer is formed using a recoater in a powder bed fusion method or in the situation where the powder is injected from a nozzle in a cladding method, it is important for the powder to have fluidity suitable for the situation. Thus, it is desirable that the powder according to the present exemplary embodiment should satisfy 40 [sec/50 g] or less as a fluidity index. To ensure such fluidity, it is desirable that each particle should have a spherical shape. The shape of the particle, however, is not limited to a spherical shape so long as the above fluidity index can be satisfied.

It is particularly desirable that the SiO particle that functions as the absorber should be in the state where the SiO particle is included independently of other components, regardless of in what states other compounds included in the powder are. It is possible to achieve a higher light absorption ability than in the state where a plurality of SiO particles composes a secondary particle or the SiO particle composes a secondary particle with another particle. Further, the laser light is likely to reach the absorber, and it is possible to efficiently use the light absorption ability of the absorber. Additionally, if the SiO particle is a particle independent of other components, it is possible to separately adjust the particle size of the SiO particle and the particle size of another particle. Thus, it is easy to control the fluidity of the powder, and it is also easy to control the amount of the absorber within the spot diameter of the laser light to be applied. This will be described in detail below.

In a case where the powder does not include a secondary particle, in terms of the achievement of desirable fluidity, it is desirable that the average particle size of each of the oxide particles other than the SiO should be 5 micrometers ($\mu$m) or more and greater than that of the SiO particle. It is more desirable that the average particle size of each of the oxide particles other than the SiO should be 5 $\mu$m or more and five times or more that of the SiO particle. It is even more desirable that the average particle size of each of the oxide particles other than the SiO should be 10 $\mu$m or more and five times or more that of the SiO particle. Moreover, in terms of the achievement of high manufacturing accuracy and in terms of the ease of the sintering or the melting of the powder, it is desirable that the average particle size of the particle should be 200 $\mu$m or less. It is more desirable that the average particle size of the particle should be 150 $\mu$m or less.

It is desirable that the average particle size of the SiO particle should be 10 $\mu$m or less and one-fifth or less of the particle size of each of the oxide particles other than the SiO. If the SiO particle satisfies this condition, the probability that the SiO particle is dispersed and a plurality of SiO particles is present near the oxide particles other than the SiO increases. Thus, heat generated by the SiO absorbing the laser light is efficiently conducted to the oxide particles other than the SiO, and the powder in the laser light application portion is likely to be melted. If the dispersiveness of the SiO in the powder and the achievement of high filling density are taken into account, it is desirable that the average particle size of the SiO particle should be as small as possible. If, on the other hand, the average particle size of the SiO particle is 1 $\mu$m or more, the scattering of the SiO particle into an atmosphere due to the application of the laser light is prevented, and the SiO particle can maintain an amount required as the absorber in the powder. Thus, it is desirable that the average particle size of the SiO particle should be 1 $\mu$m or more and 10 $\mu$m or less. It is more desirable that the average particle size of the SiO particle should be 1 $\mu$m or more and less than 5 $\mu$m.

In a case where the powder includes a secondary particle, in terms of the achievement of fluidity suitable for the additive manufacturing, it is desirable that the average particle size of the secondary particle should be 5 $\mu$m or more. It is more desirable that the average particle size should be 5 $\mu$m or more and five times or more the average diameter of the SiO particle. It is even more desirable that the average particle size should be 10 $\mu$m or more and five times or more the average diameter of the SiO particle. In terms of the achievement of high manufacturing accuracy and in terms of the ease of the sintering or the melting of the powder, it is desirable that the average particle size of the particle should be 200 $\mu$m or less. It is more desirable that the average particle size of the particle should be 150 m or less. The average particle size of a primary particle composing the secondary particle may be smaller than the average particle size of the SiO particle.

The average particle size of the SiO particle included in the powder is obtained by observing the powder using a scanning electron microscope (SEM), identifying a region composed of the SiO by composition analysis using energy-dispersive X-ray spectroscopy (EDS) provided in the SEM, measuring the area of the identified region, and calculating the equivalent circle diameter of the area. A region composed of a plurality of (100 or more) SiO particles is measured, and the median of the plurality of SiO particles is determined as the average particle size. This calculation method can be used to calculate the average particle size, regardless of the type or the state of the particle. The average particle size of a secondary particle can also be calculated using a similar technique. The powder is observed using a scanning electron microscope (SEM), composition analysis is performed, and the region of the secondary particle where primary particles gather and the types of the primary particles composing the secondary particle are identified. The equivalent circle diameter of the area of a region including a plurality of (100 or more) secondary particles is calculated, and the median of the plurality of secondary particles is determined as the average particle size.

The particle size according to the present exemplary embodiment refers to the equivalent circle diameter (the Heywood diameter) of an individual particle. The average particle size of a particle composed of a particular composition included in the powder does not refer to the particle size of an individual particle, but is the median of a particle group having the same composition. This does not mean that a particle having a size other than that indicated as the average particle size is not included in the powder.

It is desirable that the powder according to the present exemplary embodiment should not contain a resin binder. This is because the resin binder has a significantly lower melting point than those of other compounds included in the powder. Thus, the resin binder may explosively burn down due to the application of the laser light and make a hole or a defect internally present in a manufacturing region.

If the powder contains elemental carbon having sublimation properties, carbon and oxygen may be combined together and go out as gas, and the volume occupied by the elemental carbon may become a hole. Further, the elemental carbon may sublimate due to the application of the laser light, rapidly gasify, and adversely affect the manufacturing. Specifically, stress may be applied to a portion where the powder is melted or a hardened portion due to the rapid gasification, which results in a deformed manufactured product. Thus, it is desirable that the amount of the elemental carbon contained in the powder should be small. It is particularly desirable that the amount of the elemental carbon contained in the powder should be 1000 ppm or less in a molar ratio relative to metal elements of a plurality of compounds included in the powder.

The powder according to the present exemplary embodiment may be in any of a crystalline state, an amorphous state, and a mixture state. The compositions of the powder and the manufactured ceramic article do not need to match each other. Particularly, the powder and the manufactured ceramic article may have a difference such as an oxidized state or a nitrided state.

As described above, the powder according to the present invention includes an SiO particle and one or more types of oxide particles other than SiO. As the oxide particles other than the SiO, one or more types of particles are selected from the group including an $Al_2O_3$ particle, an $SiO_2$ particle, and a compound particle of $Al_2O_3$ and $SiO_2$ so that the powder includes silicon and aluminum as elements. Then, in a case where components of the oxide particles other than the SiO included in the powder according to the present invention are converted into oxides represented by the $Al_2O_3$ and the $SiO_2$, and mass fractions (% by mass) of the $Al_2O_3$, the $SiO_2$, and the SiO are represented by x, y, and z, respectively, $20 \le x < 99.8$, $0 < y \le 80$, and $0.2 \le z \le 50$ are satisfied. It does not matter in what particle forms the particles are included so long as the conversion amounts of the oxides of aluminum and silicon included in the powder satisfy the above described x and y, respectively. As the combinations of the compositions of the oxide particles other than the SiO composing the powder, the following combinations are possible: $SiO_2$-$Al_2O_3$, $SiO_2$-$Al_2O_3$-(a compound or

a mixture of the $Al_2O_3$ and the $SiO_2$), $SiO_2$-(the compound or the mixture of the $Al_2O_3$ and the $SiO_2$), and $Al_2O_3$-(the compound or the mixture of the $Al_2O_3$ and the $SiO_2$). If the stability of the composition of the powder is taken into account, $SiO_2$-$Al_2O_3$, $SiO_2$-$Al_2O_3$-(the compound of the $Al_2O_3$ and the $SiO_2$), $SiO_2$-(the compound of the $Al_2O_3$ and the $SiO_2$), and $Al_2O_3$-(the compound or the mixture of the $Al_2O_3$ and the $SiO_2$) are desirable. If the powder according to the present invention is used, it is possible to produce a ceramic article including a compound of $Al_2O_3$ and $SiO_2$ typified by mullite, using an additive manufacturing technique. A ceramic including the compound of the $Al_2O_3$ and the $SiO_2$ is characterized in being more excellent in thermal shock resistance and high-temperature creep than alumina.

The $Al_2O_3$ and the compound of the $Al_2O_3$ and the $SiO_2$ have a higher thermal conductivity than that of the $SiO_2$ and have a lower viscosity in melting than that of the $SiO_2$. Thus, with the powder satisfying $x \geq 20$, it is possible to efficiently conduct heat emitted from the SiO in the application of the laser to another particle via the $Al_2O_3$ or the compound of the $Al_2O_3$ and the $SiO_2$ and melt another particle. Then, the melted $Al_2O_3$ or the melted compound of the $Al_2O_3$ and the $SiO_2$ can fuse with a particle in the neighborhood and form a dense manufactured product. It is more desirable that the powder should satisfy $x \geq 30$.

On the other hand, since the $Al_2O_3$ has a low viscosity in melting, the $Al_2O_3$ is suitable for the manufacturing, but the following issue arises. When the $Al_2O_3$ is coagulated from a melted state, the $Al_2O_3$ is likely to grow in a particular crystal axis direction. If a crystal randomly starts to grow at various positions in the melted $Al_2O_3$, gaps of crystal grains are not sufficiently filled, and blowholes are likely to be formed in a hardened portion. Accordingly, in the powder according to the present invention, it is desirable that the mass fraction of the $Al_2O_3$ should be $x < 99.8$. It is more desirable that the mass fraction of the $Al_2O_3$ should be $x \leq 99$. Then, an appropriate amount of the $SiO_2$ is added. With the appropriately added amount of the $SiO_2$, the compound of the $Al_2O_3$ and the $SiO_2$ is generated when the $Al_2O_3$ is coagulated, and a plurality of phases occurs. This makes the crystal composition of a hardened portion fine and prevents the occurrence of blowholes.

In terms of the prevention of the occurrence of blowholes in a hardened portion by adding the $SiO_2$ to the powder, it is desirable that the mass fraction of the $SiO_2$ should be $0 < y$. It is more desirable that the mass fraction of the $SiO_2$ should be $1.0 \leq y$. It is even more desirable that the mass fraction of the $SiO_2$ should be $3.0 \leq y$. On the other hand, the $SiO_2$ has a high viscosity in melting. Thus, if the powder includes excessive $SiO_2$, the $SiO_2$ is likely to form into a spherical shape in a melted state and be coagulated as it is, and a manufactured product to be formed is likely to be porous. To manufacture a dense ceramic article, it is desirable that $y \leq 80$ should be satisfied. It is more desirable that $y < 50$ should be satisfied. Thus, to manufacture a dense ceramic article with few blowholes, it is desirable that the mass fraction of the $SiO_2$ should be $1.0 \leq y < 50$. It is more desirable that the mass fraction of the $SiO_2$ should be $3.0 \leq y < 50$. Also in a case where the x, y, and z, which are the mass fractions of the $Al_2O_3$, the $SiO_2$, and the SiO, respectively, satisfy $y < x + z$, a dense manufactured product is likely to be obtained, which is desirable.

Even in a case where a composition other than the $Al_2O_3$, the $SiO_2$, and the SiO is included, to achieve a ceramic article having high thermal shock resistance and a low thermal expansion rate, it is desirable that the powder satisfying $90 \leq x + y + z$ should be used. It is more desirable that the powder should satisfy $95 \leq x + y + z$.

The mass fraction of the SiO included in the powder satisfies $0.2 \leq z \leq 50$. If the mass fraction z of the SiO is smaller than 0.2, the amount of heat generated per unit time in the application of the laser to the powder is insufficient, and it is difficult to melt the powder. If the amount of input heat is increased by increasing the laser output or extending the application time to melt the powder, heat is conducted to the periphery of the laser application portion, and it is difficult to locally melt the powder, which results in deterioration of the manufacturing accuracy. To locally efficiently melt the powder, it is necessary to satisfy $0.2 \leq z$, and it is more desirable to satisfy $0.5 \leq z$. This condition holds true, regardless of whether a case where the SiO particle is a particle independent of the oxide particles other than the SiO or a case where the SiO particle composes a secondary particle with the oxide particles other than the SiO.

If the mass fraction z of the SiO included in the powder is 0.2 or more, the SiO acts as an absorber.

If more than 50% by mass of the SiO is included in the powder, the manufacturing accuracy tends to decrease. The reason is considered that a rise in temperature of a portion to which the laser light is applied is so rapid that a melted material is scattered around. Thus, to obtain excellent manufacturing accuracy, the amount of the SiO contained in the powder is $z \leq 50$.

As described above, it is desirable that the SiO particle should be a particle independent of other particles (an independent particle) and have a small grain size. If, however, the powder includes many SiO particles having small diameters, the fluidity of the powder may decrease, and a fluidity index suitable for the additive manufacturing method may not be obtained. If the SiO particle is included as a particle independent of other particles in the powder, it is desirable that the amount of the contained SiO should be $z \leq 20$.

If the SiO particle is an independent particle, then to achieve a more efficient temperature rise by application of the laser, the state where the region to which the laser light to be applied is applied includes at least one SiO particle is desirable. Thus, it is desirable to select the average particle size of the SiO according to the focal spot size of the laser light to be applied to the powder in a production process. The same applies to a case where the SiO particle composes a secondary particle with the oxide particles other than the SiO.

In terms of thermal uniformity in the application of the laser light, the state where the focal spot size of the laser light probabilistically includes two or more SiO particles is more desirable. It is desirable that the distance between SiO particles in the powder should be probabilistically 100 $\mu$m or less. It is more desirable that the distance between SiO particles in the powder should be 50 $\mu$m or less. Such a state is achieved by setting the mass fraction of the SiO in the powder to 0.2 or more.

The state where the focal spot size of the laser light includes two or more SiO particles can also be achieved by adjusting the focal spot size of the laser light. In terms of manufacturing accuracy, if it is taken into account that it is desirable that the focal spot size of the laser light should be 100 $\mu$m or less, it is desirable that the average particle size of the SiO particle should be 1 $\mu$m or more and 10 $\mu$m or less. The focal spot size of the laser light to be applied may be determined according to desired manufacturing accuracy, and may be 100 $\mu$m or more, depending on the required manufacturing accuracy. In this case, if the focal spot size of the laser light includes two or more SiO particles, the average particle size of the SiO particle may be greater than 10 $\mu$m. The same applies to a case where the SiO particle composes a secondary particle with other particles.

In terms of the obtaining of a sufficient light absorption ability, it is desirable that the light absorption ability of the SiO alone should be 10% or more. It is more desirable that the light absorption ability of the SiO alone should be 40% or more. It is even more desirable that the light absorption ability of the SiO alone should be 60% or more. Since the light absorption ability of the SiO changes according to the element ratio between Si and O, the desirable constituent element ratio deviates within ±20% from the stoichiometric ratio. If the ratio between the silicon and the oxygen is almost 1:1, the SiO exhibits a high absorption ability for versatile light of a wavelength of about 1 $\mu$m (Nd:YAG), which is particularly desirable. In terms of the obtaining of a high light absorption ability while the constituent ratio between the silicon and the oxygen in the SiO is maintained, it is more desirable that the SiO particle in the powder should be an independent particle.

The constituent element ratio of a compound included in the powder according to the present exemplary embodiment can be identified using scanning electron microscope-energy-dispersive X-ray spectroscopy (SEM-EDX), transmission electron microscope-energy-dispersive X-ray spectroscopy (TEM-EDX), electron diffraction, or X-ray diffraction. Alternatively, the constituent element ratio of a compound included in the powder can also be identified by combining inductively coupled plasma atomic emission spectroscopy (ICP-AES), inductively coupled plasma mass spectrometry (ICP-MS), X-ray fluorescence spectrometry, or an inert gas fusion method.

A general spectrometer can be used to measure the light absorption ability. Light of an assumed wavelength (the laser wavelength of the laser to be applied in the production process or a wavelength near the laser wavelength) is emitted to a measurement target powder filling a sample dish, and the reflection of the light is measured using an integrating sphere. Using, as reference data, the reflection in a case where a sample is not present, the light absorption ability can be calculated based on the ratio between the measured reflection and the reference data.

The absorber, the composition of which has been changed, is a compound composing at least a part of a ceramic article. The assumed wavelength refers to the laser wavelength of the laser to be applied in the production process or a wavelength near the laser wavelength. The powder, the light absorption ability of which is measured, may be a compound equivalent to the ceramic article, and does not need to be a powder itself used to produce the ceramic article.

Due to such a decrease in the light absorption ability, a portion sintered or melted and coagulated once by the application of the laser light is less likely to be influenced by the subsequent application of the laser light, and the shape of the coagulated portion is maintained. Consequently, it is possible to produce a precise three-dimensional ceramic article as designed.

If a person is exposed to a powder of crystalline $SiO_2$ for a long period, the respiratory system may be damaged. Thus, it is more desirable that the powder should include amorphous $SiO_2$ as the $SiO_2$.

(Method for Producing Ceramic Article)

The powder according to the present exemplary embodiment is suitably used in an additive production method in which laser light is applied to a powder according to slice data generated based on three-dimensional data of a ceramic article to be produced to manufacture the ceramic article. Specifically, the powder according to the present exemplary embodiment is used in a production method using a powder bed fusion method or a cladding method. In this production process, the ceramic article is produced by alternately performing the following steps (i) and (ii) multiple times.

Step (i): the step of placing a powder in a laser light application portion
Step (ii): the step of applying laser light to the powder to harden the powder

In a case where the ceramic article is manufactured using the powder bed fusion method, the steps (i) and (ii) are performed by leveling the powder according to the present exemplary embodiment at a predetermined thickness on a base material and then applying the laser light to the powder. In a case where the ceramic article is manufactured using the cladding method, the steps (i) and (ii) are performed by ejecting the powder according to the present exemplary embodiment to a predetermined portion and applying the laser light to the predetermined portion.

Although the wavelength of the laser light used in the manufacturing is not limited, it is desirable to use laser light adjusted to a desired focal spot size such as a diameter of 10 $\mu$m to 2 mm in a lens or a fiber. The focal spot size is one of parameters influencing the manufacturing accuracy. To satisfy a manufacturing accuracy of 100 $\mu$m (0.1 mm), although depending on the situation, it is desirable that the linewidth should be comparable with the manufacturing accuracy. It is desirable that the focal spot size should be a diameter of 100 $\mu$m or less. It does not matter whether the application of the laser light is continuous or pulsed. As the laser light, laser having a wavelength near 1000 nm from, for example, an Nd:YAG laser and a Yb fiber laser can be suitably used. This is because the SiO component exhibits a particularly high absorption ability with respect to light of a wavelength of about 1 $\mu$m.

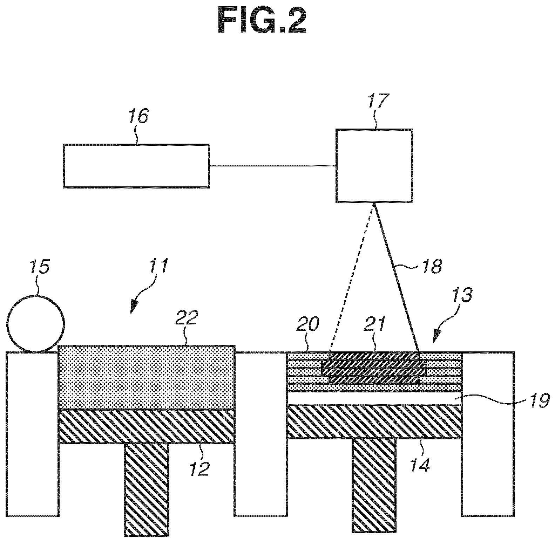

Fig. 2 is a conceptual diagram of a three-dimensional manufacturing apparatus using the powder bed fusion method. As illustrated in Fig. 2, the three-dimensional manufacturing apparatus includes a powder measure 11, a manufacturing unit 13, a recoater unit 15, a laser light source 16, and a scanner unit 17 that scans laser light generated by the laser light source 16. In production of a ceramic article, the following operations are executed. First, a powder 22 is pushed up by lifting a bottom portion 12 of the powder measure 11, and a stage 14 of the manufacturing unit 13 on which a base material 19 is set is lowered by a predetermined distance. Next, the coater unit 15 supplies the powder 22 to the manufacturing unit 12, and a powder 20 is leveled at a predetermined thickness in a region wider than the assumed ceramic article. According to slice data generated from three-dimensional data of the ceramic article, the scanner unit 14 scans laser light 18 generated by the laser light source 16, to directly perform drawing on the powder 20 leveled on the base material 19. The drawn region is sintered or melted and coagulated, and is hardened. This process is repeated, whereby a ceramic article 21 in which hardened portions are laminated is obtained.

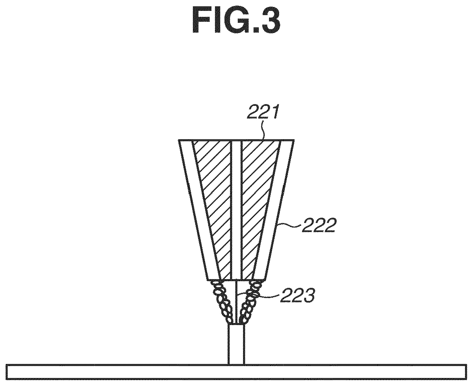

With reference to Fig. 3, the cladding method is described. The cladding method is a technique in which powders are ejected from a plurality of powder supply holes 222 in a cladding nozzle 221, laser light 223 is applied to a region where the powders are focused, and a ceramic article is sequentially manufactured at a desired location. The cladding method is characterized by being capable of performing manufacturing on a curved surface.

In the production process, an atmosphere may be controlled. In the production process, not only the atmospheric atmosphere, but also an atmosphere where a compound included in the powder is likely to reduce, such as an inert atmosphere including nitrogen or other rare gas, an atmosphere containing hydrogen, or a depressurized atmosphere, or an oxygen atmosphere may be desirable. Such an atmosphere is controlled, whereby it is possible to use the powder including a compound in an oxidized or reduced state relative to the chemical controversial ratio in the production of a ceramic article.

In the production process according to the present exemplary embodiment as described above, the powder according to the present exemplary embodiment is used, whereby it is possible to manufacture a ceramic article in a stabilized manner and manufacturing accuracy of the ceramic article is ensured.

A ceramic article produced using the powder according to the present exemplary embodiment is not limited to an inorganic material in a crystalline state. A part or more than half of the ceramic article may be in an amorphous state so long as a desired physical property value can be obtained. Alternatively, a ceramic article including a region close to a metal state by reducing the powder may be produced by the above production process.

(Evaluation Method)

The porosity of a ceramic article was evaluated by a method based on Japanese Industrial standards (JIS) R1634 for a method for a measurement of the sintered body density and the open porosity of a fine ceramic. Specifically, on three ceramic articles prepared using material similar to a sample used to measure mechanical strength, porosities of the ceramic articles were calculated using $\{(W3 - W1)/(W3 - W2)\} \times 100$, where the dry mass of each ceramic article was W 1, the underwater mass of the ceramic article was W2, and the saturated mass of the ceramic article was W3, and the resultants were averaged.

The composition of a powder or a manufactured product was measured by inductively coupled plasma atomic emission spectroscopy (ICP-AES).

Examples

Specific examples of the powder according to the present exemplary embodiment are illustrated.

Ceramic articles were produced by the powder bed fusion method, using powders 1 to 21 including silicon monoxide (SiO), and aluminum oxide ($Al_2O_3$) and silicon dioxide ($SiO_2$) in addition to the silicon monoxide, and the porosities of the ceramic articles were measured.

Each of the powders 1 to 15 and 18 to 22 was prepared by agitating the following powders weighed in quantities illustrated in table 1 for 2 hours using a rocking mixer.

A powder composed of an $Al_2O_3$ particle (CB-A20S by Showa Denko K.K.): an average particle size of 20 μm
A powder composed of an amorphous $SiO_2$ particle (HS-304 by Nippon Steel Chemical & Material Co., Ltd.): an average particle size of 28 μm
A pulverized powder of a powder composed of an SiO particle (SiO-P-002 by Japan Natural Energy & Resources Co., Ltd.): an average particle size of 4 μm

The $Al_2O_3$ particle and the $SiO_2$ particle had approximately spherical shapes.

Each of the powders 16 and 17 was prepared by the following procedure. A slurry was prepared by weighing and mixing the following powders so that the powders had a composition ratio illustrated in table 2, and dispersing the mixed powder in water. A granulated powder having an average particle size of 30 μm was prepared from the prepared slurry by a spray dryer method and then subjected to heat treatment at a temperature between 600°C and 800°C, whereby a granulated powder composed of a spherical secondary particle in which a single particle includes an $Al_2O_3$ particle and an $SiO_2$ particle was prepared.

A powder composed of an $Al_2O_3$ particle (Taimicron TM-DA by Taimei Chemicals Co., Ltd.): an average particle size of 0.17 μm
A powder composed of an $SiO_2$ particle (Seahoster W10 by Nippon Shokubai Co., Ltd.): an average particle size of 0.2 μm

The above described powder composed of the SiO particle was added to the obtained granulated powder so that the resulting powder had the composition ratio illustrated in table 2. Then, the resulting powder was agitated for 10 minutes by the rocking mixer.

When the compositions of the prepared powders 1 to 22 were analyzed, a component except for the $Al_2O_3$, the $SiO_2$, and the SiO in each powder was less than 1 weight percent (wt%).

Next, a ceramic article was produced using each of the prepared powders, and the manufacturing accuracy and the density of the ceramic article were evaluated. The ceramic article was prepared using DMP 200 of ProX (product name) series by 3D Systems, Inc., in which Yb fiber laser was provided.

Through the above steps, a cuboid having a length of 40 mm, a width of 6 mm, and a height of 5 mm was prepared as the ceramic article. Using an $Al_2O_3$ plate as a base material, the ceramic article was manufactured by setting the thickness per powder layer (a value for lowering the manufacturing stage unit 12) to 20 μm. Laser light having a focal spot size of 100 μm and a power of 270 W was applied to the powder at a scanning speed of 500 mm/sec.

A region having a length of 40 mm and a width of 6 mm was drawn at pitches of 100 μm, and the drawn regions were laminated to a height of 5 mm. Since the thickness per layer is about 20 μm, the powder includes particles having a thickness greater than or equal to that of a single layer, but these particles are removed when the powder is leveled at an early stage of the lamination. The powder layers are melted due to the application of the laser light and shrink in the thickness direction. Thus, the apparent thickness of the powder layers gradually increases while the lamination is repeated, and eventually converges in the range from 67 to 133 μm. Thus, even if the average particle size of the powder to be used is greater than a powder layer of 20 μm, this is not an issue in use.

The surface of the manufactured product was observed using an optical microscope. It was confirmed that the ceramic article prepared using each of the powders 1 to 15 was manufactured with high accuracy such that average roughness (Ra) of the surface of the ceramic article was less than 30 μm. It was confirmed that particularly, the ceramic article prepared using each of the powders 1 to 7, the powders 12 to 14, and the powders 16 and 17, in which the amount of the contained SiO was 20 wt% or less, was manufactured with excellent accuracy such that Ra of the surface of the ceramic article was 25 μm or less. In contrast, Ra of the ceramic article for comparison prepared using the powder 22 was 40 μm or more, and excellent manufacturing accuracy was not obtained. The reason is considered that since the powder 22 did not include the SiO particle, light was diffused in the powder in the application of the laser light, and thus, the powder was melted or sintered in a wide range.

Tables 1 and 2 illustrate the evaluation results of the density. Regarding the density of each ceramic article, the porosity was measured, and the density was classified as the following four levels. If the porosity was 11% or less, the density was classified as A. If the porosity was greater than 11% and 14% or less, the density was classified as B. If the porosity was greater than 14% and 16% or less, the density was classified as C. If the porosity was greater than 16%, the density was classified as D.

In the above classifications, A indicates a manufactured product in the state of an extremely excellent dense body. B indicates a manufactured product in the state of an excellent dense body. C indicates a manufactured product in the state of a dense body. D indicates a manufactured product in the state of a porous body or the state where many cracks are included.

[Table 1]

|  | Mixed powder name | $Al_2O_3$ particle wt% | $SiO_2$ particle wt% | SiO particle wt% | Porosity % | Density |
|---|---|---|---|---|---|---|
| Example 1 | Powder 1 | 50 | 49 | 1 | 8 | A |
| Example 2 | Powder 2 | 75 | 23 | 2 | 7 | A |
| Example 3 | Powder 3 | 75 | 20 | 5 | 7 | A |
| Example 4 | Powder 4 | 75 | 5 | 20 | 10 | A |
| Example 5 | Powder 5 | 83 | 15 | 2 | 11 | A |
| Example 6 | Powder 6 | 95 | 3 | 2 | 10 | A |
| Example 7 | Powder 7 | 55 | 25 | 20 | 12 | B |
| Example 8 | Powder 8 | 98.8 | 1 | 0.2 | 12 | B |
| Example 9 | Powder 9 | 20 | 50 | 30 | 15 | C |
| Example 10 | Powder 10 | 20 | 30 | 50 | 13 | B |
| Example 11 | Powder 11 | 50 | 1 | 49 | 13 | B |
| Example 12 | Powder 12 | 32 | 48 | 20 | 12 | B |
| Example 13 | Powder 13 | 55 | 25 | 20 | 13 | B |
| Example 14 | Powder 14 | 21 | 77 | 2 | 16 | C |
| Example 15 | Powder 15 | 21 | 51 | 28 | 16 | C |
| Comparative example 1 | Powder 18 | 19 | 80 | 1 | 19 | D |
| Comparative example 2 | Powder 19 | 19 | 60 | 21 | 22 | D |
| Comparative example 3 | Powder 20 | 19 | 42 | 39 | 23 | D |
| Comparative example 4 | Powder 21 | 99.8 | 0 | 0.2 | 16 | C |

[Table 2]

|  | Mixed powder name | $Al_2O_3$-$SiO_2$ particle | | SiO particle [wt%] | Porosity | Density |
|---|---|---|---|---|---|---|
|  |  | $Al_2O_3$ component [wt%] | $SiO_2$ component [wt%] |  |  |  |
| Example 16 | Powder 16 | 50 | 49.5 | 0.5 | 10 | A |
| Example 17 | Powder 17 | 55 | 25 | 20 | 14 | B |

The manufactured product prepared using each of the powders 1 to 17 was a dense body classified as the density of A to C. Particularly, the density of the manufactured product using each of the powders 1 to 8, the powders 10 to 13, and the powders 16 and 17, which satisfied $z \leq 20$ and $y < x + z$, was classified as A or B, and the density was extremely excellent or excellent. In contrast, the density of the manufactured product for comparison prepared using each of the powders 18 to 20, which satisfied $x < 20$, was classified as D, which indicates a porous body.

In each of comparative examples 1 to 3, when a melt having a spherical shape heated and melted due to the application of the laser was formed by being coagulated, many pores remained in the melt, and a porous ceramic article was obtained. The reasons is considered that the viscosity of the melted $SiO_2$ was higher than that of the $Al_2O_3$. In

comparative example 4, the reason of the high porosity is considered that when the $Al_2O_3$ was melted and coagulated, highly anisotropic crystal grains were formed, which results in inclusion of many spaces.

In the manufactured product for comparison prepared using the powder 21 that did not include the $SiO_2$, a plurality of huge cracks having widths of 10 $\mu$m or more was present, and the density was low, namely D. The reason is considered that the stress relaxation effect of the $SiO_2$ was not obtained when the highly anisotropic $Al_2O_3$ was melted and coagulated.

When the manufactured product in each of the comparative examples in which many cracks were included and the density of which was evaluated to D was subjected to heat treatment at about 1700°C, the effect of repairing the cracks was seen.

While a description has been given above of a manufacturing method in which, with heat emitted by an SiO particle as an absorber absorbing laser light, a particle of another metal oxide, such as an $Al_2O_3$ particle or an $SiO_2$ particle, is melted and then coagulated. However, the powder according to the present invention is not limited to this method. The powder according to the present invention can also be used in a manufacturing method in which a resin adhesive is added to the powder according to the present invention, and the resin adhesive is melted with heat emitted by the SiO particle absorbing the laser light and then cured to bond the particles with the resin adhesive. The resin adhesive may be added as a particle independent of other particles to the powder, or may be attached to the surface of the $Al_2O_3$ particle, the $SiO_2$ particle, or the SiO particle.

The powder according to the present invention enables the production of a dense ceramic article with high accuracy without, as an absorber, a rare earth component that is used in an additive production method for manufacturing with application of laser light. The powder according to the present invention enables the provision of an inexpensive ceramic article to a field that requires a complex shape.

The present invention is not limited to the above exemplary embodiment, and can be changed and modified in various ways without departing from the spirit and the scope of the present invention. Thus, the following claims are appended to publicize the scope of the present invention.

This application claims the benefit of Japanese Patent Applications No. 2021-067069, filed April 12, 2021, and No. 2022-061812, filed April 1, 2022, which are hereby incorporated by reference herein in their entirety.

**Claims**

1. A powder of an oxide that is used in an additive production method for manufacturing with application of laser light, the powder comprising:

   a silicon monoxide (SiO) particle; and
   at least one type of oxide particle other than SiO,
   wherein as the oxide particle other than the SiO, at least one type is selected from the group including an aluminum oxide ($Al_2O_3$) particle, a silicon dioxide ($SiO_2$) particle, and a compound particle of $Al_2O_3$ and $SiO_2$, so that the powder except for the SiO particle includes silicon and aluminum as elements, and
   wherein in a case where components of the powder except for the SiO particle are converted into oxides represented by the $Al_2O_3$ and the $SiO_2$, x, y, and z representing mass fractions of the $Al_2O_3$, the $SiO_2$, and the SiO, respectively, in an entirety of the powder satisfy the following relationships:

$$20 \leq x < 99.8,$$

$$0 < y \leq 80,$$

and

$$0.2 \leq z \leq 50.$$

2. The powder according to claim 1, wherein the x, y, and z satisfy $90 \leq x + y + z$.

3. The powder according to claim 1 or 2, wherein the x, y, and z satisfy $95 \leq x + y + z$.

4. The powder according to any one of claims 1 to 3, wherein the mass fraction of the $SiO_2$ satisfies $1.0 \leq y < 50$.

**5.** The powder according to any one of claims 1 to 4, wherein the mass fraction of the $SiO_2$ satisfies $3.0 \leq y < 50$.

**6.** The powder according to any one of claims 1 to 5, wherein the x, y, and z satisfy $y < x + z$.

**7.** The powder according to any one of claims 1 to 6, wherein the SiO particle is included as an independent particle.

**8.** The powder according to claim 7, wherein an average particle size of the SiO particle is one-fifth or less of an average particle size of the oxide particle other than the SiO.

**9.** The powder according to claim 7 or 8, wherein the average particle size of the SiO particle is 1 micrometer ($\mu$m) or more and 10 $\mu$m or less.

**10.** The powder according to any one of claims 1 to 9, wherein amorphous $SiO_2$ is included as the $SiO_2$.

**11.** The powder according to any one of claims 1 to 6, wherein a particle composing the powder includes a secondary particle of the SiO particle and the oxide particle other than the SiO.

**12.** A method for producing a ceramic article, the method comprising:

performing

placing a powder in a laser light application portion, and
applying laser light to the powder to harden the powder,

multiple times,
wherein the powder includes an SiO particle and at least one type of oxide particle other than SiO,
wherein as the oxide particle other than the SiO, at least one type is selected from the group including an $Al_2O_3$ particle, an $SiO_2$ particle, and a compound particle of $Al_2O_3$ and $SiO_2$, so that the powder except for the SiO particle includes silicon and aluminum as elements, and
wherein in a case where components of the powder except for the SiO particle are converted into oxides represented by the $Al_2O_3$ and the $SiO_2$, x, y, and z representing mass fractions of the $Al_2O_3$, the $SiO_2$, and the SiO, respectively, in an entirety of the powder satisfy the following relationships:

$$20 \leq x < 99.8,$$

$$0 < y \leq 80,$$

and

$$0.2 \leq z \leq 50.$$

**13.** The method for producing the ceramic article according to claim 12, wherein the x, y, and z satisfy $90 \leq x + y + z$.

**14.** The method for producing the ceramic article according to claim 12 or 13, wherein the x, y, and z satisfy $95 \leq x + y + z$.

**15.** The method for producing the ceramic article according to any one of claims 12 to 14, wherein the mass fraction of the $SiO_2$ satisfies $1.0 \leq y < 50$.

**16.** The method for producing the ceramic article according to any one of claims 12 to 15, wherein the x, y, and z satisfy $y < x + z$.

**17.** The method for producing the ceramic article according to any one of claims 12 to 16, wherein the SiO particle is included as an independent particle.

**18.** The method for producing the ceramic article according to any one of claims 12 to 17, wherein the laser light is applied according to slice data generated from three-dimensional data of the ceramic article.

19. The method for producing the ceramic article according to any one of claims 12 to 18, wherein the laser light is light from an Nd:YAG laser or a Yb fiber laser.

# FIG.1

# FIG.2

# FIG.3

## INTERNATIONAL SEARCH REPORT

International application No.

**PCT/JP2022/017333**

### A. CLASSIFICATION OF SUBJECT MATTER

*B28B 1/30*(2006.01)i; *B33Y 10/00*(2015.01)i; *B33Y 70/10*(2020.01)i; *C01B 33/113*(2006.01)i; *C01B 33/12*(2006.01)i;
*C01F 7/02*(2022.01)i; *C04B 35/64*(2006.01)i
FI:    B28B1/30; B33Y10/00; B33Y70/10; C04B35/64; C01B33/113 A; C01B33/12 A; C01F7/02

According to International Patent Classification (IPC) or to both national classification and IPC

### B. FIELDS SEARCHED

Minimum documentation searched (classification system followed by classification symbols)

B28B1/30; B33Y10/00; B33Y70/10; C01B33/113; C01B33/12; C01F7/02; C04B35/64

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-100141 A (CANON KABUSHIKI KAISHA) 02 July 2020 (2020-07-02) paragraphs [0007], [0022], [0040]-[0058], [0070], [0078], [0090]-[0094] | 1, 7-12, 17-19 |
| A | JP 2020-172674 A (SEIKO EPSON CORP) 22 October 2020 (2020-10-22) entire text, all drawings | 1-19 |
| P, X | JP 2021-66177 A (CANON KABUSHIKI KAISHA) 30 April 2021 (2021-04-30) paragraphs [0019], [0053], [0104]-[0121], [0144], [0147]-[0151] | 1-3, 7-14, 17-19 |
| P, A | | 4-6, 15-16 |
| E, X | JP 2022-66155 A (CANON KABUSHIKI KAISHA) 28 April 2022 (2022-04-28) paragraphs [0114], [0166]-[0173] | 1-3, 7-14, 17-19 |
| E, A | | 4-6, 15-16 |

☐ Further documents are listed in the continuation of Box C.       ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **01 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/017333**

| Patent document cited in search report | | | Publication date (day/month/year) | Patent family member(s) | | | Publication date (day/month/year) |
|---|---|---|---|---|---|---|---|
| JP | 2020-100141 | A | 02 July 2020 | US 2021/0292240 A1 paragraphs [0007], [0025], [0045]-[0067], [0080], [0091], [0102] WO 2020/129958 A1 EP 3885089 A1 | | | |
| JP | 2020-172674 | A | 22 October 2020 | (Family: none) | | | |
| JP | 2021-66177 | A | 30 April 2021 | WO 2021/079909 A1 | | | |
| JP | 2022-66155 | A | 28 April 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019019051 A
- JP 2021067069 A
- JP 2022061812 A